# EUROPEAN PATENT APPLICATION

(11) **EP 4 703 049 A1**
(43) Date of publication of application: **04.03.2026**
(21) Application number: 25172864.8
(22) Date of filing: 28.04.2025
(51) Int. Cl.: B05C 5/00, B05C 5/02

(54) **SLOT DIE AND APPARATUS AND METHOD OF CONTROLLING TEMPERATURE OF THE SLOT DIE**

(30) Priority: 27.08.2024 KR 20240115422
(71) Applicant: SAMSUNG SDI CO., LTD., Yongin-si, Gyeonggi-do 17084 (KR)
(72) Inventor: CHOI, Hoiju, 17084 Yongin-si, Gyeonggi-do (KR); YUK, Eunsung, 17084 Yongin-si, Gyeonggi-do (KR); JOO, Minhee, 17084 Yongin-si, Gyeonggi-do (KR)
(74) Representative: Gulde & Partner

(57) **Abstract**

A slot die includes: an upper die (110); a lower die (120) having a cavity (140), a gap being formed between the upper die (110) and the lower die (120); a slurry supply unit (130, 131, 132) connected to an external slurry supply source, the cavity (140) being connected to the slurry supply unit (130); a temperature controller (190) configured to control a temperature of a slurry in the cavity (140); and a temperature sensor (180) configured to measure the temperature of the slurry. A slot (150) is formed by the gap, is connected to the cavity (140), and is configured to emit the slurry onto a base material.

## Description

### BACKGROUND

### 1. Field

Aspects of embodiments of the present disclosure relate to a slot die and an apparatus and a method of controlling a temperature of the slot die.

### 2. Description of the Related Art

Different from primary batteries, which are not designed to be charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as of hybrid vehicles or electric vehicles, and for power storage. A secondary battery generally includes an electrode assembly including (or consisting of) a positive electrode and a negative electrode, a case that accommodates the electrode assembly, a terminal part connected to the electrode assembly, etc.

Secondary batteries include an electrode assembly which charges and discharges a current, a case which accommodates the electrode assembly and an electrolyte, a cap plate which is coupled to an opening in the case, and an electrode terminal through which the electrode assembly is connected at the outside of the cap plate.

The electrode assembly may be formed as a winding type or a stack type, in which electrodes are disposed at both sides of a separator, which is an electrical insulator, and the separator and the electrodes are wound or stacked, respectively, or may be formed in a combination of these types. The separator isolates electrodes having different polarities in the electrode assembly while maintaining (or allowing) an ion conductance, and thus, enables charging and discharging of the electrode assembly.

Electrodes are formed by coating an active material slurry on a base material. Slot dies are used in coating the active material slurry on the base material to manufacture the electrode. Slot dies include a lower block or die and an upper block or die, which form a chamber or cavity for supplying an active material slurry and set a height of a slot discharging the active material slurry.

During a coating process, a distribution of a coating loading level occurs due to a temperature change of a slurry, and due to this, it is difficult to manage product quality. In the related art, a distribution of a coating loading level is reduced through control based on a process factor, such as revolutions per minute (RPM) of a pump or the width of a die gap. Yet, still, a reduction in process capability occurs during a long period or a short period. Thus, an object of the disclosure may be to improve the process capability of the coating process.

The above information disclosed in this Background section is for enhancement of understanding of the background of the present disclosure, and therefore, it may contain information that does not constitute related (or prior) art.

### SUMMARY

Embodiments of the present disclosure provide a slot die including a temperature controller to control a temperature of a slurry in the cavity and an apparatus and method of controlling a temperature of the slot die.

However, aspects and features of the present disclosure are not limited to those described above, and other aspects and features not mentioned herein will be clearly understood by those skilled in the art from the description of the present disclosure below.

A slot die, according to an aspect of the present disclosure, includes: an upper die; a lower die having a cavity, a gap being formed between the upper die and the lower; a slurry supply unit connected to an external slurry supply source, the cavity being connected to the slurry supply unit; a temperature controller configured to control a temperature of a slurry in the cavity; and a temperature sensor configured to measure the temperature of the slurry. A slot is formed by the gap, is connected to the cavity, and is configured to emit the slurry onto a base material. Hence, as the viscosity of the slurry may change with temperature, the flow characteristics of the slurry can be efficiently controlled by controlling the temperature of the slurry.

In some embodiments, the temperature controller may include a plurality of heating wires and a plurality of cooling water lines under the cavity. An advantage of this embodiment may be that the slurry can be heated-up and cooled-down to reach a stable and/or desired temperature or temperature range.

In some embodiments, the plurality of heating wires and the plurality of cooling water lines may be alternately arranged. An advantage of this embodiment may be that cold spots or hotspots are avoided or at least reduced, thereby achieving a more homogeneous temperature distribution in the slurry.

In some embodiments, the slot die may further include a cooling water supply unit configured to supply cooling water to the plurality of cooling water lines. An advantage of this embodiment may be that the flowing cooling water can more efficiently dissipate heat energy from the slurry, as the cooling water in the cooling water lines can be resupplied maintaining a desired difference in temperature between the slurry and the cooling water.

In some embodiments, the temperature sensor may include a first temperature sensor configured to measure the temperature of the slurry supplied from the slurry supply unit before it reaches the cavity. An advantage of this embodiment may be that the temperature and/or flow rate of the cooling water or the energy fed to the heating wires can be adapted before the slurry reaches the cavity, thereby further reducing variations in slurry temperature.

In some embodiments, the temperature sensor may further include a second temperature sensor configured to measure the temperature of the slurry in the cavity. An advantage of this embodiment may be that overheating or undercooling can be detected fast.

In some embodiments, the temperature controller may be adjacent to the cavity. An advantage of this embodiment may be that leads connecting the temperature controller to the temperature sensor can be short.

A slot die temperature control apparatus, according to an aspect of the present disclosure, includes a slot die and a controller. The slot die includes: an upper die; a lower die having a cavity, a gap being formed between the upper die and the lower; a slurry supply unit connected to an external slurry supply source, the cavity being connected to the slurry supply unit; a temperature controller configured to control a temperature of a slurry in the cavity; and a temperature sensor configured to measure the temperature of the slurry. The controller is configured to control the temperature of the temperature controller based on the temperature of the slurry measured by the temperature sensor. A slot is formed by the gap, is connected to the cavity, and is configured to emit the slurry onto a base material. Hence, as the viscosity of the slurry may change with temperature, the flow characteristics of the slurry can be efficiently controlled by controlling the temperature of the slurry.

In some embodiments, the temperature controller may include a plurality of heating wires and a plurality of cooling water lines under the cavity. An advantage of this embodiment may be that the slurry can be heated-up and cooled-down to reach a stable and/or desired temperature or temperature range.

In some embodiments, the plurality of heating wires and the plurality of cooling water lines may be alternately arranged. An advantage of this embodiment may be that cold spots or hotspots are avoided or at least reduced, thereby achieving a more homogeneous temperature distribution in the slurry.

In some embodiments, the slot die temperature control apparatus may further include a cooling water supply unit configured to supply cooling water to the plurality of cooling water lines. An advantage of this embodiment may be that the flowing cooling water can more efficiently dissipate heat energy from the slurry, as the cooling water in the cooling water lines can be resupplied maintaining a desired difference in temperature between the slurry and the cooling water.

In some embodiments, the temperature sensor may include a first temperature sensor configured to measure the temperature of the slurry supplied from the slurry supply unit before it reaches the cavity. An advantage of this embodiment may be that the temperature and/or flow rate of the cooling water or the energy fed to the heating wires can be adapted before the slurry reaches the cavity, thereby further reducing variations in slurry temperature.

In some embodiments, the temperature sensor may further include a second temperature sensor configured to measure the temperature of the slurry in the cavity. An advantage of this embodiment may be that overheating or undercooling can be detected fast.

In some embodiments, the controller may be configured to compare a previously set temperature setting value with the temperature of the slurry measured by the first temperature sensor. When the temperature of the slurry measured by the first temperature sensor is less than the previously set temperature setting value, the controller may be configured to operate the plurality of heating wires, and when the temperature of the slurry measured by the first temperature sensor is greater than the previously set temperature setting value, the controller may be configured to operate the plurality of cooling water lines. An advantage of this embodiment may be that the slurry temperature can be changed effectively.

In some embodiments, the controller may be configured to compare a previously set temperature setting value with the temperature of the slurry measured by the second temperature sensor. When the temperature of the slurry measured by the second temperature sensor is less than the previously set temperature setting value, the controller may be configured to increase an operation temperature of the plurality of heating wires, and when the temperature of the slurry measured by the second temperature sensor is greater than the previously set temperature setting value, the controller may be configured to decrease a cooling water temperature of the plurality of cooling water lines. An advantage of this embodiment may be that the slurry temperature can be controlled effectively.

In some embodiments, the temperature controller may be adjacent to the cavity. An advantage of this embodiment may be that leads connecting the temperature controller to the temperature sensor can be short.

A slot die temperature control method, according to an aspect of the present disclosure, includes: providing a slot die and controlling a temperature of the slot die. The slot dies includes: an upper die; a lower die having a cavity, a gap being formed between the upper die and the lower; a slurry supply unit connected to an external slurry supply source, the cavity being connected to the slurry supply unit; a temperature controller configured to control a temperature of a slurry in the cavity; and a temperature sensor configured to measure the temperature of the slurry. The controlling the temperature of the slot die includes controlling a temperature of the temperature controller based on the temperature of the slurry measured by the temperature sensor. Hence, as the viscosity of the slurry may change with temperature, the flow characteristics of the slurry can be efficiently controlled by controlling the temperature of the slurry.

In some embodiments, the temperature controller may include a plurality of heating wires and a plurality of cooling water lines under the cavity. An advantage of this embodiment may be that the slurry can be heated-up and cooled-down to reach a stable and/or desired temperature or temperature range.

In some embodiments, the temperature sensor may include a first temperature sensor configured to measure the temperature of the slurry supplied from the slurry supply unit before it reaches the cavity. An advantage of this embodiment may be that the flowing cooling water can more efficiently dissipate heat energy from the slurry, as the cooling water in the cooling water lines can be resupplied maintaining a desired difference in temperature between the slurry and the cooling water.

In some embodiments, the temperature sensor may further include a second temperature sensor configured to measure the temperature of the slurry in the cavity. An advantage of this embodiment may be that overheating or undercooling can be detected fast.

In some embodiments, the controlling the temperature of the temperature controller may include: comparing a previously set temperature setting value with the temperature of the slurry measured by the first temperature sensor; when the temperature of the slurry measured by the first temperature sensor is less than the previously set temperature setting value, operating the plurality of heating wires; and when the temperature of the slurry measured by the first temperature sensor is greater than the previously set temperature setting value, operating the plurality of cooling water lines. An advantage of this embodiment may be that the slurry temperature can be changed effectively.

In some embodiments, the controlling the temperature of the temperature controller may further include: comparing a previously set temperature setting value with the temperature of the slurry measured by the second temperature sensor; when the temperature of the slurry measured by the second temperature sensor is less than the previously set temperature setting value, increasing an operation temperature of the plurality of heating wires; and when the temperature of the slurry measured by the second temperature sensor is greater than the previously set temperature setting value, decreasing a cooling water temperature of the plurality of cooling water lines. An advantage of this embodiment may be that the slurry temperature can be controlled effectively.

In some embodiments, the temperature controller may be adjacent to the cavity. An advantage of this embodiment may be that leads connecting the temperature controller to the temperature sensor can be short.

According to embodiments of the present disclosure, a temperature controller may control a temperature of the slurry in the cavity. Thus, the occurrence of a deviation of a coating loading level caused by a slurry temperature change may be avoided and the quality and processibility of a coated electrode plate may be improved. The temperature controller may be disposed adjacent to a cavity, which is a space where a slurry stays (resides or is accumulated) before being discharged.

Moreover, in the related art, an area occupied by a constant tank used immediately before the supply of a conventional slot die may be large and excessive time may be consumed in increasing or decreasing a temperature thereof. On the other hand, according to embodiments of the present disclosure, a temperature controller including a heating wire and a cooling water line each disposed adjacent to a cavity, which is a space where a slurry stays before being discharged, may be provided. Thus, there is no spatial limitation and a temperature of the slurry may be easily controlled. The temperature controller may be disposed adjacent to a cavity.

It is to be understood that both the foregoing general description and the following detailed description of the present disclosure are exemplary and explanatory in nature and are intended to provide further explanation of the present disclosure as claimed.

### BRIEF DESCRIPTION OF THE DRAWINGS

The accompanying drawings are included to provide a further understanding of the present disclosure and are incorporated in and constitute a part of this application. The embodiments described in the present disclosure, together with the description, explain aspects and features of the present disclosure. In the drawings:
FIGS. 1A to 1C are diagrams schematically illustrating an apparatus for controlling a temperature of a slot die according to embodiments of the present disclosure.
FIG. 2 is a flowchart describing a method of controlling a temperature of a slot die according to embodiments of the present disclosure.

### DETAILED DESCRIPTION

Embodiments of the present disclosure are described below, in detail, with reference to the accompanying drawings. The terms or words used in this specification and claims should not be construed as being limited to their common or dictionary meanings but should be understood to have meanings and concepts in agreement with the present disclosure based on the principle that an inventor can define the concept of each term suitably to describe his/her own invention in the best way possible. The embodiments described in this specification and the configurations illustrated in the drawings are examples of the present disclosure and do not cover all the technical ideas of the present disclosure; accordingly, it should be understood that various changes and modifications may be made to the described embodiments.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The controller and/or any other relevant devices or components according to embodiments of the present disclosure described herein may be implemented utilizing any suitable hardware, firmware (e.g., an application-specific integrated circuit), software, and/or a suitable combination of software, firmware, and hardware. For example, the various components of the controller may be formed on one integrated circuit (IC) chip or on separate IC chips. Further, the various components of the controller may be implemented on a flexible printed circuit film, a tape carrier package (TCP), a printed circuit board (PCB), or formed on a same substrate as the controller. Further, the various components of the controller may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device or the functionality of a particular computing device may be distributed across one or more other computing devices without departing from the scope of the exemplary embodiments of the present disclosure.

The terminology used herein Is for the purpose of describing embodiments of the present disclosure and is not intended to limit the present disclosure.

The present invention will be described in detail with reference to the attached drawings.

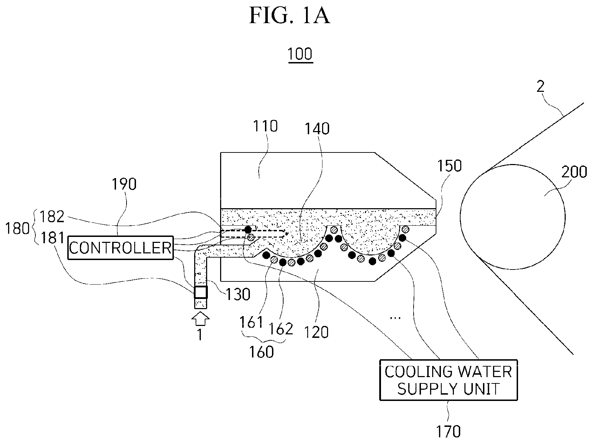

FIGS. 1A to 1C are diagrams schematically illustrating an apparatus for controlling a temperature of a slot die according to embodiments of the present disclosure.

Referring to FIGS. 1A to 1C, an apparatus for controlling a temperature of a slot die (hereinafter referred to as a slot die temperature control apparatus) 100, according to embodiments of the present disclosure, may include an upper die 110, a lower die 120, a slurry supply unit 130, one or more cavities 140, a slot 150, a temperature controller 160, a cooling water supply unit 170, a temperature sensor 180, and a controller 190. The elements 110 to 180, from the upper die 110 to the temperature sensor 180, may together configure a slot die.

The slot die may be divided into the upper die 110 and the lower die 120, and the upper die 110 and the lower die 120 may form a gap therebetween, which is a path through which a slurry 1 moves.

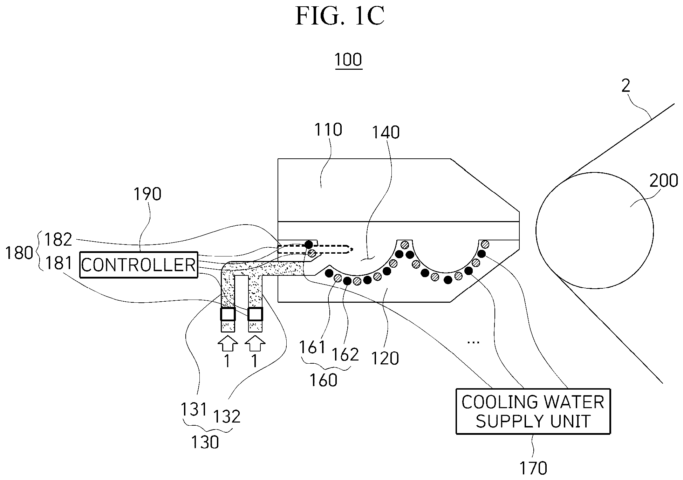

The slurry supply unit 130 may be connected to an external slurry supply source and may supply the slurry 1. In some embodiments, the external slurry supply source may be a slurry tank. Referring to FIG. 1A, the slurry supply unit 130 may be configured as one (e.g., a single slurry supply unit 130 may be provided), or referring to FIG. 1C, the slurry supply unit 130 may be configured as two or more (e.g., a plurality of slurry supply units 130 may be provided). For example, referring to FIG. 1C, slurry supply units 131 and 132 may be connected to a plurality of external slurry supply sources.

The one or more cavities 140 may be formed in the lower die 120, may be connected to (e.g., may be in fluid communication with) the slurry supply unit 130, and may form a space where the slurry 1 supplied from the slurry supply unit 130 stays (or resides). In some embodiments, a cross-sectional surface of each of the one or more cavities 140 may have a semicircular shape.

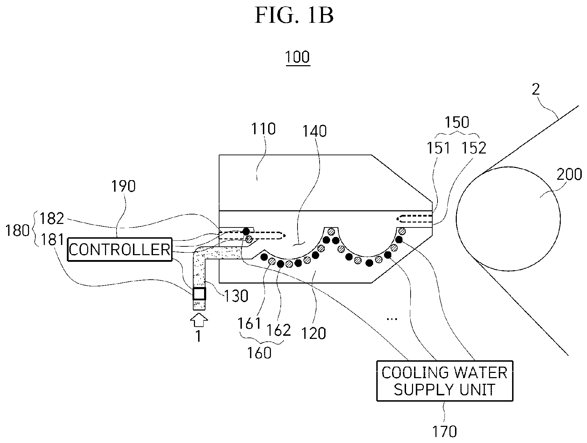

The slot 150 may be connected to (e.g., open to or in fluid communication with) the cavity 140 through a gap between the upper die 110 and the lower die 120 and may coat (or deposit) the slurry 1 on a base material. The slot 150 may be an outlet of the slurry 1 in the slot die. The slurry 1 discharged from the slot 150 may be applied to and coated on an electrode plate 2, which is transferred (or moved) through a transfer drum 200. Referring to FIG. 1A, the slot 150 may be configured as one, or referring to FIG. 1B, the slot 150 may be configured as two or more. Referring to FIG. 1B, the slurry 1 may be discharged through two slots 151 and 152 and may be applied to and coated on the electrode plate 2.

The temperature controller 160 may be disposed adjacent to the cavity 140 and may control a temperature of the slurry 1 in the cavity 140. The slot die temperature control apparatus 100, according to embodiments of the present disclosure, may maintain a temperature of the slurry 1 by using the temperature controller 160. In some embodiments, the temperature controller 160 may include a plurality of heating wires 161 and a plurality of cooling water lines 162 under the cavity 140. The plurality of heating wires 161 may increase a temperature of the slurry 1 in the cavity 140, and the plurality of cooling water lines 162 may decrease a temperature of the slurry 1 in the cavity 140. In such an embodiment, the plurality of heating wires 161 and the plurality of cooling water lines 162 may be alternately arranged. As described above, because the plurality of heating wires 161 and the plurality of cooling water lines 162 are alternately arranged, a temperature of the slurry 1 in the cavity 140 may uniformly increase or decrease.

The cooling water supply unit 170 may supply cooling water to the plurality of cooling water lines 162. In some embodiments, the cooling water supply unit 170 may be a water pump.

The temperature sensor 180 may measure a temperature of the slurry 1. In some embodiments, the temperature sensor 180 may include a first temperature sensor 181 which measures a temperature of the slurry 1 supplied from the slurry supply unit 130 and a second temperature sensor 182 which measures a temperature of the slurry in the one or more cavities 140. Accordingly, a difference between a temperature of the slurry 1 supplied from the slurry supply unit 130 and a temperature of the slurry in the one or more cavities 140 may be checked (or determined).

The controller 190 may control a temperature of the temperature controller 160 based on a temperature of the slurry 1 measured by the temperature sensor 180. In some embodiments, the controller 190 may control a temperature of each of the plurality of heating wires 161 and the plurality of cooling water lines 162 based on a temperature of the slurry 1 measured by the first temperature sensor 181 and the second temperature sensor 182.

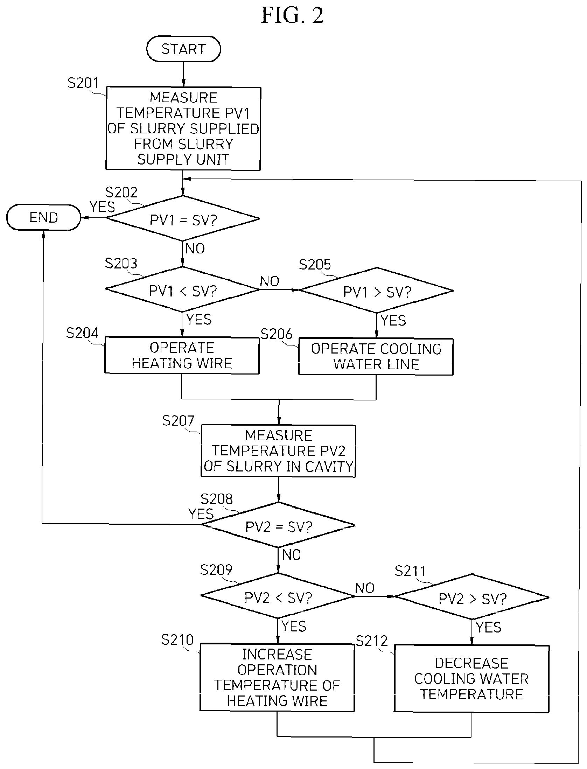

Hereinafter, a method of controlling a temperature of a slot die (hereinafter referred to as a slot die temperature control method) according to embodiments of the present disclosure, which may be performed by the controller 190 of the slot die temperature control apparatus according to embodiments of the present disclosure, will be described in detail with reference to FIG. 2.

FIG. 2 is a flowchart describing a slot die temperature control method according to embodiments of the present disclosure.

Referring to FIG. 2, the slot die temperature control method, according to embodiments of the present disclosure, may include steps S201 to S212.

Step S201 may be a step of measuring a temperature PV1 of a slurry supplied from a slurry supply unit by using a first temperature sensor.

Step S202 may be a step of comparing a previously set (or reference) temperature setting value SV with the temperature PV1 of the slurry measured by the first temperature sensor. Here, the temperature setting value SV may be a value that is previously set in a controller so that a deviation of a coating loading level does not occur and may be calculated as an appropriate value through a coating process performed a plurality of times at a manufacturing site.

When the temperature PV1 of the slurry measured by the first temperature sensor is less than the temperature setting value SV as a result of the comparison in step S203, a plurality of heating wires may operate in step S204. When the temperature PV1 of the slurry measured by the first temperature sensor is greater than the temperature setting value SV in step S205, a plurality of cooling water lines may operate in step S206.

Step S207 may be a step of measuring a temperature PV2 of a slurry in one or more cavities by using a second temperature sensor.

Step S208 may be a step of comparing the temperature setting value SV with the temperature PV2 of the slurry measured by the second temperature sensor.

When the temperature PV2 of the slurry measured by the second temperature sensor is less than the temperature setting value SV as a result of the comparison in step S209, an operation temperature of the plurality of heating wires may increase in step S210. When the temperature PV2 of the slurry measured by the second temperature sensor is greater than the temperature setting value SV in step S211, a cooling water temperature of the plurality of cooling water lines may decrease (or may be lowered) in step S212.

That is, in the slot die temperature control apparatus and method according to embodiments of the present disclosure, the controller may determine whether or not to operate the plurality of heating wires and the plurality of cooling water lines based on a result of a measurement by the first temperature sensor and may control the operation temperature of the plurality of heating wires and the cooling water temperature of the plurality of cooling water lines based on a result of a measurement by the second temperature sensor, thereby controlling a temperature of a slurry to maintain a previously set temperature setting value.

Hereinabove, the slot die temperature control method according to embodiments of the present disclosure has been described with reference to the flowchart illustrated in FIG. 2. To provide a simple description, the control method is illustrated as a series of blocks and has been described accordingly, but the present disclosure is not limited to the order of the blocks and some blocks may be provided or may occur concurrently (or simultaneously) or in an order that differs from the illustration and description of the present disclosure, or the order of blocks, a flow path, and various other branches for accomplishing the same or similar result may be implemented. Also, all blocks illustrated for implementing a method described herein may not be needed.

Furthermore, in the description given above with reference to FIG. 2, based on an implementation example of the present disclosure, each step may be further divided into additional steps or may be combined into fewer steps. Also, some steps may be omitted depending on the embodiment or the order between or of the steps may be changed. Furthermore, despite other omitted descriptions, the description of FIGS. 1A to 1C may be applied to the description of FIG. 2. Also, the description of FIG. 2 may be applied to the descriptions of FIGS. 1A to 1C.

According to embodiments of the present disclosure, a temperature controller may be disposed adjacent to a cavity, which is a space where a slurry stays (or resides) before being discharged, and may control a temperature of the slurry in the cavity. Thus, the occurrence of a deviation of a coating loading level caused by a slurry temperature change may be avoided, and the quality and processibility of a coated electrode plate may be improved.

Moreover, in the related art, an area occupied by a constant tank used immediately before the supply of a conventional slot die may be large, and excessive time may be consumed in increasing or decreasing a temperature thereof. On the other hand, according to embodiments of the present disclosure, a temperature controller including a heating wire and a cooling water line, each disposed adjacent to a cavity where a slurry stays before being discharged, may be provided, and thus, there may be no spatial limitation, and a temperature of the slurry may be easily controlled.

Hereinafter, materials which may be used in a slurry during coating in the slot die and an apparatus and method of controlling a temperature of the slot die according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material and may further include a binder and/or a conductive material.

Content of the positive electrode active material may be in a range of about 90 wt.% to about 99.5 wt.% and for example up to 92 wt.%, up to 94 wt.%, up to 96 wt.%, up to 98 wt.% or up to 99.5 wt.% with respect to the positive electrode active material layer 100 wt.%. Content of the binder and the conductive material may be in a range of about 0.5 wt.% to about 5 wt.% and for example up to 1 wt.%, up to 2 wt.%, up to 3 wt.%, up to 4 wt.% or up to 5 wt.% with respect to the positive electrode active material layer 100 wt.%.

Al may be used as the current collector, but the present disclosure is not limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversible intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles and may have a form in which amorphous carbon has been coated on surfaces of silicon particles.

The silicon-carbon composite may further include crystalline carbon. For example, the silicon-carbon composite may include a core including crystalline carbon and silicon particles and an amorphous carbon coating layer disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

For example, the negative electrode active material layer may include the negative electrode active material in a range of about 90 wt.% to about 99 wt.% and for example up to 92 wt.%, up to 94 wt.%, up to 96 wt.%, up to 98 wt.% or up to 99 wt.%, the binder in a range of about 0.5 wt.% to about 5 wt.% and for example up to 1 wt.%, up to 2 wt.%, up to 3 wt.%, up to 4 wt.% or up to 5 wt.%, and the conductive material in a range of about 0 wt.% to about 5 wt.% and for example up to 1 wt.%, up to 2 wt.%, up to 3 wt.%, up to 4 wt.% or up to 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

It will be apparent to those skilled in the art that various modifications and variations can be made in the present disclosure without departing from the scope of the present disclosure. Thus, it is intended that the present disclosure covers all modifications and variations thereof provided they fall within the scope of the appended claims.

## Claims

1. A slot die comprising:
an upper die (110);
a lower die (120) having a cavity (140), a gap being formed between the upper die (120) and the lower die (120);
a slurry supply unit (130) connected to an external slurry (1) supply source, the cavity (140) being connected to the slurry supply unit (130);
a temperature controller (160) configured to control a temperature of a slurry (1) in the cavity (140); and
a temperature sensor (180) configured to measure the temperature of the slurry (1),
wherein a slot (150) is formed by the gap, is connected to the cavity (140), and is configured to emit the slurry (1) onto a base material.

2. The slot die as claimed in claim 1, wherein the temperature controller (160) comprises a plurality of heating wires (161) and a plurality of cooling water lines (162) under the cavity (140).

3. The slot die as claimed in claim 2, wherein the plurality of heating wires (161) and the plurality of cooling water lines (162) are alternately arranged.

4. The slot die as claimed in claim 2 or 3, further comprising a cooling water supply unit (170) configured to supply cooling water to the plurality of cooling water lines (162).

5. The slot die as claimed in any of claims 1 to 4, wherein the temperature sensor (180) comprises a first temperature sensor (181) configured to measure the temperature of a slurry (1) supplied from the slurry supply unit (130) before it reaches the cavity (140).

6. The slot die of claim 5, wherein the temperature sensor (180) further comprises a second temperature sensor (182) configured to measure the temperature of the slurry (1) in the cavity (140).

7. A slot die temperature control apparatus comprising:
a slot die according to any of claims 1 to 6; and
a controller (190) configured to control the temperature of the temperature controller (160) based on the temperature of the slurry (1) measured by the temperature sensor (180).

8. The slot die temperature control apparatus as claimed in claim 7 when depending from claim 5 or 6, wherein the controller (190) is configured to compare a previously set temperature setting value with the temperature of the slurry (1) measured by the first temperature sensor (181),
wherein, when the temperature of the slurry (1) measured by the first temperature sensor (181) is less than the previously set temperature setting value, the controller (190) is configured to operate the plurality of heating wires (161), and
wherein, when the temperature of the slurry (1) measured by the first temperature sensor (181) is greater than the previously set temperature setting value, the controller (190) is configured to operate the plurality of cooling water lines (162).

9. The slot die temperature control apparatus as claimed in claim 8, wherein the controller (190) is configured to compare the previously set temperature setting value with the temperature of the slurry (1) measured by the second temperature sensor (182),
wherein, when the temperature of the slurry (1) measured by the second temperature sensor (182) is less than the previously set temperature setting value, the controller (190) is configured to increase an operation temperature of the plurality of heating wires (161), and
wherein, when the temperature of the slurry (1) measured by the second temperature sensor (182) is greater than the previously set temperature setting value, the controller (190) is configured to decrease a cooling water temperature of the plurality of cooling water lines (162).

10. A slot die temperature control method, the method comprising:
providing a slot die comprising:
an upper die (110);
a lower die (120) having a cavity (140), a gap being formed between the upper die (110) and the lower die (120);
a slurry supply unit (130) connected to an external slurry (1) supply source, the cavity (140) being connected to the slurry supply unit (130);
a temperature controller (160) configured to control a temperature of a slurry (1) in the cavity (140); and
a temperature sensor (180) configured to measure (S201) the temperature of the slurry (1); and
controlling (S204, S206) a temperature by the temperature controller (160) based on the temperature of the slurry (1) measured by the temperature sensor (180).

11. The slot die temperature control method as claimed in claim 10, wherein the temperature controller (160) comprises a plurality of heating wires (161) and a plurality of cooling water lines (162) under the cavity (140).

12. The slot die temperature control method as claimed in claim 11, wherein the temperature sensor (180) comprises a first temperature sensor (181) configured to measure (S201) the temperature of the slurry (1) supplied from the slurry supply unit (130) before it reaches the cavity (140).

13. The slot die temperature control method as claimed in claim 12, wherein the temperature sensor (180) further comprises a second temperature sensor (182) configured to measure (S207) the temperature of the slurry (1) in the cavity (140).

14. The slot die temperature control method as claimed in claim 13, wherein the controlling the temperature of the temperature controller (160) comprises:
comparing (S202) a previously set temperature setting value with the temperature of the slurry (1) measured by the first temperature sensor (181);
when the temperature of the slurry (1) measured by the first temperature sensor (181) is less than the previously set temperature setting value, operating (S204) the plurality of heating wires (161); and
when the temperature of the slurry (1) measured by the first temperature sensor (181) is greater than the previously set temperature setting value, operating (S206) the plurality of cooling water lines (162).

15. The slot die temperature control method of claim 14, wherein the controlling the temperature of the temperature controller (160) further comprises:
comparing (S208) the previously set temperature setting value with the temperature of the slurry (1) measured by the second temperature sensor (182);
when the temperature of the slurry (1) measured by the second temperature sensor (182) is less than the previously set temperature setting value, increasing (S210) an operation temperature of the plurality of heating wires (161); and
when the temperature of the slurry (1) measured by the second temperature sensor (182) is greater than the previously set temperature setting value, decreasing (S211) a cooling water temperature of the plurality of cooling water lines (162).
